Europäisches Patentamt

**(19) European Patent Office**

Office européen des brevets

(11) Publication number: **0 008 201**
A1

## (12) EUROPEAN PATENT APPLICATION

(21) Application number: 79301555.3

(22) Date of filing: 02.08.79

(51) Int. Cl.³: **B 29 H 9/10,** B 60 C 9/00, C 23 C 17/00

(30) Priority: 03.08.78 US 930799

(43) Date of publication of application: 20.02.80 Bulletin 80/4

(84) Designated Contracting States: BE FR IT

(71) Applicant: NATIONAL-STANDARD COMPANY, 601 N. Eighth Street, Niles, Michigan 49120 (US)

(72) Inventor: Friend, Raymond A., 906 S. Lincoln, Niles, Michigan 49120 (US)

(74) Representative: Newby, Raymond Laurence et al, J.Y. & G.W. Johnson Furnival House 14/18 High Holborn, London WC1V 6DE (GB)

(54) **Rubber adherent ferrous wire.**

(57) A ferrous wire having a homogeneous coating deposited thereon, which coating comprises from 0.3 to 6 per cent by weight of nickel, from 50 to 75 per cent by weight of copper and from 50 to 25 per cent by weight of zinc. The homogeneous coating is applied in an amount of from 0.25 to 16.0 g/kg of the combined ferrous wire and coating. The coated ferrous wire is adapted to provide increased and superior precured humidity-aged adhesion and postcured steam-aged adhesion to rubber-based products such as tires, hose and belts.

- 1 -

Rubber adherent ferrous wire

This invention relates to a ferrous wire for use as a reinforcement for rubber-based material, for example tires, hose and conveyor belts.

The adhesion of rubber to reinforcing wire or strands twisted from multiple wires is a property of primary importance in the end use of rubber-reinforced articles. Generally, two standardized procedures are widely used for testing the adhesion of wire to rubber material, namely ASTM Standard Method D-2229 (for tire cord) and ASTM Standard Method D-1871 (for tire bead wire). Both tests generally involve placing the wire to be evaluated in a mould containing rubber and applying heat and pressure for an appropriate length of time to cure the particular rubber compound. After curing, the rubber-wire composite is positioned in a standard fixture and the wires are subjected to an increasing tensile load until the wires are pulled out of the composite. It is generally believed that a high percentage of wire surface retaining adhered rubber after being pulled from the primary rubber body (for tire cord) and that a high force or load at which the wire is pulled out of the rubber (for tire cord and tire bead wire) are indications of good adhesion. Moreover, such evaluations are equally applicable to rubber hose and belt materials.

More recently, a number of non-standardized test procedures have been used to evaluate adhesion that results from exposing the uncured rubber-wire composite to moisture and heat before curing. In this case, which is known as testing the precured humidity-aged adhesion, the rubber-wire composite is often exposed to humidity in the range of from 80 to 100 per cent relative humidity at temperatures of from room temperature to 80°C. for periods of from one to fourteen days after moulding, but prior to curing. After the humidity-aging, the rubber-wire composite is cured by applying appropriate heat and pressure for the appropriate time and then tested in the manner as set forth above with respect to the ASTM tests. Both load and rubber coverage are observed as before. Thus, the precured humidity-aged rubber adhesion testing is important because it is indicative of the shelf-life of the wire, the shelf-life of the rubber compound, and is also indicative of the shelf-life of moulded rubber-metal-reinforced articles, for example tires, hose and belts.

Other non-standardized test procedures have been used to evaluate adhesion resulting from exposure of the cured rubber wire composite to hot steam after curing. In this case, which is known as testing the postcured steam-aged adhesion, the cured rubber-wire composite is exposed to steam at temperatures of from $100^{\circ}C$ to $150^{\circ}C$ for periods of a few hours to several days. After steam aging, the rubber-wire composite is tested in the manner set forth above with respect to the ASTM tests. Such postcured steam-aged adhesion testing is important because it is indicative of service life of cured rubber products.

As is readily appreciated many characteristics of the rubber compound itself (for example compositional characteristics, homogeneity and particle surface area) and characteristics of the wire surface (for example composition of a plated surface on the wire, the homogeneity of this plating and surface residual films) are influential in obtaining good rubber-metal adhesion in general and precured humidity-aged adhesion or postcured steam-aged adhesion in particular.

Previous attempts to improve the adhesion between the metallic wire and the rubber-based material have included coating the metallic wire with brass, a binary alloy composed of copper and zinc. Although brass coated metallic wire is probably the most widely used material in the rubber tire industry, surface phenomena occurring between the brass coated wire and the rubber-based material have prevented brass coated wire from having wide spread application within the tire industry and from having wide spread application with respect to various rubber-based compositions and materials. For example, it is believed that moisture and oxidation phenomena on the surface of the brass coated metallic wire cause adverse effects upon the aged adhesion of rubber to the metallic surface.

- 3 -

Accordingly, various attempts have been suggested to improve the adhesion between the rubber-based material and the metallic surface such as the utilization of organic adhesive materials on the brass surface, the utilization of thin metallic films on the surface of the brass, and the utilization of thin metallic films between the matallic wire and the brass outer surface somehow to increase and aid in the adhesion between the metallic wire and the rubber based material.

Although such suggestions and attempts may under certain conditions provide adequate adhesion between the metallic substrate material and a specific rubber-based composition, commercial application of such suggestions have not been utilized. For example, the composition of the rubber-based materials, such as rubber tire compositions, are largely proprietary to the major rubber companies and the specific identification of the composition thereof vary from manufacturer to manufacturer. Thus, a particular treated metallic substrate may adhere well with a particular manufacturer's rubber-based composition and the same material will not adhere well to a second manufacturer's rubber based composition. Additionally, the placing of a thin film of any number of specific metals on the outside surface of the brass coated steel wire or between the steel and the brass coating has substantially reduced the ability of such treated wires to be drawn to the precise specifications necessary for insertion into tire materials, thus resulting in a metallic substrate material which is commercially undesirable and unacceptable.

The present invention aims to provide a coated ferrous wire which possesses increased precured humidity-aged adhesion and postcured steam-aged adhesion with a rubber based material compared with hitherto known coated ferrous wire.

According to the invention, a ferrous wire, for example a carbon steel wire, for use as a reinforcement for rubber-based material, for example tire, hose or conveyor rubber, having a homogeneous alloy coating deposited thereon, is characterised in that the coating comprises from 0.3 to 6

- 4 -

per cent by weight of nickel, from 50 to 75 per cent by weight of copper and from 50 to 25 per cent by weight of zinc, and in that the coating comprises from 0.25 to 16.0 grams per kilogram of the combined coating and wire.

After the homogeneous coating is deposited upon the ferrous wire it has excellent drawing properties, for example, a coated wire of 1.02 mm diameter is readily drawn to a diameter of from 0.75 mm to 0.10 mm. In general a reduction in cross-section of from 10 to 95 per cent can be obtained during drawing. The wire may then be stranded and twisted together to provide tire cord wires, or used as drawn for hose reinforcing wires, and provides a material possessing superior precured humidity-aged adhesion and postcured steam-aged adhesion when combined with rubber-based compositions. Alternatively, when it is to be used as tire bead wire (which is usually of circular cross-section), the coated wire may be produced by drawing a ferrous wire to final size (usually nominally between about 0.89 mm and 2.03 mm in diameter) by conventional means, cleaning with a pickling agent and then immersing in an electrolytic bath to permit the homogeneous deposition of the alloy coating of nickel, copper and zinc onto the ferrous wire passing through the bath, preferably in an amount of from 0.25 to 1.25 grams of the coating per kilogram of the combined coating and wire.

A ferrous wire in accordance with the invention, with its ternary alloy coating containing copper, nickel and zinc, provides superior precured humidity-aged adhesion and postcured steam-aged adhesion than previously thought possible. Although the mechanism or chemistry involved in this superior adhesion is not understood, it is believed that the conditions of the aging tests do not affect the surface of the copper-zinc-nickel homogeneous alloy as occurs with commonly metal-coated ferrous wire.

In one method of preparing a ferrous wire in accordance with the invention, a ferrous wire having a diameter of approximately 1.02 mm was manufactured by the usual practice and was then patented, by passing the wire through a conven-

- 5 -

tional furnace. Next, the ferrous wire was passed through an acid pickle, suitably containing hydrochloric acid, and then a rinse prior to its entrance into an electrolytic plating bath containing copper and zinc cyanides, and anodes generally in the form of brass. Additionally, the bath contained a nickel salt (for example nickel carbonate) or a nickel or nickel-containing anode. The bath was controlled within the following general ranges;

Copper concentration: 25-100 g/litre

Zinc concentration : 2-10 g/litre

Sodium cyanide
concentration: 20-60 g/litre (titrateable)

Sodium hydroxide
concentration: 20-60 g/litre

Nickel concentration: 20-1000 mg/litre

Cathode current
density : 10-30 amps/dm$^2$

Bath Temperature : 70-90$^{\circ}$C.

Immersion Time : Dependent upon thickness desired.

Subsequent to the electrolytic deposition of the ternary alloy onto the ferrous wire, the coated wire was passed through a water rinse and a lubricant coating solution containing 100 g/litre of borax and was then conventionally drawn through a series of dies to a final filament diameter of from 0.10 mm to 0.38 mm. Five of these wire filaments were then twisted together by conventional means to form a five wire strand for use as a rubber reinforcement.

The invention will now be illustrated by the following non-limitative Examples:

EXAMPLE I

Four samples of coated carbon steel wire were made as follows:-

Sample No. 1 was a carbon steel wire of 1.02 mm diameter on which was coated plain brass not containing any nickel.

Sample No. 2 was a carbon steel wire of 1.02 mm diameter with plain brass plated over a distinct layer of nickel plate of 0.06 gram per kilogram of the combined nickel and wire. The nickel was plated prior to the brass plating from a conventional fluoborate solution containing 50 g/litre of nickel, saturated cold with boric acid at a pH of 4.0 at 70°C., using a current density of 25 amps/dm$^2$ with 1.33 seconds immersion.

Sample No. 3 was a carbon steel wire of 1.02 mm diameter plated with the ternary alloy containing copper, zinc and nickel in accordance with the present invention from the cyanide plating bath described above and containing a nickel salt.

Sample No. 4 was a carbon steel wire of 1.02 mm diameter coated with brass containing less than 0.1 per cent by weight of nickel as an inpurity.

After plating, each sample was drawn through a series of dies to a final filament diameter of 0.25 mm.

Lengths of the four drawn samples were made up into strands each composed of five of the wires of 0.25 mm diameter, and the strands were incorporated as reinforcing material in a proprietary rubber compound A used commercially by one of the major rubber manufacturers. Some of the wire-rubber composites thus produced were tested by procedures recommended by the manufacturer of the rubber compound to determine their unaged adhesion strength and rubber coverage (i.e. the wire-rubber composites were not subjected to either precured humidity-aging or postcured steam-aging). Others of the wire-rubber composites were tested by the same procedures after they had been subjected to precured humidity-aging for 2 days at 38°C and 95 per cent relative humidity.

The compositions of wire coatings in the four samples and the results of the adhesion testing of the wire-rubber composites are given in the ensuing Table I. In this Table, the coating weights are expressed in grams of coating per kilogram of coated wire, and in the strand made from wire of Sample No. 2, the amount of nickel present is expressed as a percentage by weight of the sum of nickel and brass weights.

TABLE I

| Strand made of wire of Sample No: | Details of metallic coating on the wire: | | | | Adhesion test results: | | | |
|---|---|---|---|---|---|---|---|---|
| | Coating weight (g/kg) | Concentration (weight per cent) of: | | | Strength (kg) | | Rubber coverage (per cent) | |
| | | Cu | Zn | Ni | Unaged | Aged | Unaged | Aged |
| 1 | 3.6 | 66.7 | 33.3 | 0 | 59 | 34 | 100 | 50 |
| 2 | 3.2 | 68.4 | 29.4 | 2.2 | 36 | 27 | 30 | 5 |
| 3 | 4.0 | 66.7 | 30.7 | 2.6 | 51 | 39 | 100 | 80 |
| 4 | 4.0 | 66.8 | 33.1 | 0.098 | 51 | 27 | 100 | 50 |

Table I indicates that the wire of Sample No. 3, coated in accordance with the invention with a homogeneous ternary alloy containing copper, nickel and zinc, exhibits significantly increased rubber adhesion strength and rubber coverage compared with the conventionally coated wires of Samples Nos. 1, 2 and 4.

EXAMPLE II

A further eight samples (Samples Nos. 5 to 12) of coated carbon steel wire were made with different nickel and copper concentrations in the wire coatings, Samples Nos. 5, 7 and 9 having plain brass coatings, Sample No. 11 having a coating of brass containing nickel as an impurity, and Samples Nos. 6, 8, 10 and 12 being wires in accordance with the invention.

As in the case of Example I, the eight samples were made up into strands composed of five wires each having a nominal diameter of 0.25 mm, and the strands were incorporated as reinforcing material in a proprietary rubber compound B used commercially as a rubber tire composition. Some of the wire-rubber composites produced were tested by procedures recommended by the manufacturer of the rubber compound to determine their unaged adhesion strength and rubber coverage. Others of the wire-rubber composites were tested by the same procedures after they had been subjected to precured humidity-aging for 7 days at $38^{\circ}$C and 98 per cent relative humidity.

- 8 -

The compositions of the wire coatings in the eight samples and the results of the adhesion testing are given in the ensuing Table II:-

TABLE II

| Strand made of wire of Sample No: | Details of metallic coating on the wire: | | | | | Adhesion test results: | | | |
| --- | --- | --- | --- | --- | --- | --- | --- | --- | --- |
| | Coating weight (g/kg) | Concentration (weight per cent) of: | | | | Strength (kg) | | Rubber coverage (per cent) | |
| | | Cu | Zn | Ni | | Unaged | Aged | Unaged | Aged |
| 5 | 4.9 | 66.0 | 34.0 | 0 | | 56 | 25 | 100 | 20 |
| 6 | 5.0 | 66.0 | 33.0 | 1.0 | | 45 | 33 | 90 | 90 |
| 7 | 4.6 | 64.7 | 35.3 | 0 | | 56 | 22 | 100 | 10 |
| 8 | 4.0 | 64.5 | 35.0 | 0.5 | | 53 | 31 | 100 | 55 |
| 9 | 4.2 | 62.7 | 37.3 | 0 | | 55 | 22 | 100 | 30 |
| 10 | 3.9 | 62.3 | 35.8 | 1.9 | | 45 | 33 | 90 | 90 |
| 11 | 4.2 | 62.7 | 37.2 | 0.1 | | 55 | 22 | 100 | 30 |
| 12 | 4.4 | 65.4 | 29.6 | 5.0 | | 50 | 43 | 95 | 65 |

Table II indicates that the wires of Samples Nos. 6, 8, 10 and 12 exhibit superior adhesion strength and superior humidity-aged rubber coverage than the wires of Samples Nos. 5, 7, 9 and 11.

EXAMPLE III

A further two samples (Samples Nos. 13 and 14) of coated carbon steel wire were made and tested for postcured steam-aged adhesion to rubber, Sample No. 13 being a carbon steel wire plated with a plain brass coating and Sample No. 14 being a carbon steel wire in accordance with the invention.

As in the case of Example I, the two samples were made up into strands composed of five wires each having a nominal diameter of 0.25 mm, and the strands were incorporated as reinforcing material in the rubber compound A mentioned in Example I. One each of the two different wire-rubber composites thus produced was tested by procedures recommended by the manufacturer of the rubber compound to determine its unaged adhesion strength and rubber coverage, and a further one of each of the two different wire-rubber composites was tested by the same procedures after it had been subjected to postcured steam-aging for 5 hours with saturated steam at a temperature of 110°C.

The compositions of wire coatings in the two samples of wire and the results of the adhesion testing of the wire-rubber composites are given in the ensuing Table III:-

### TABLE III

| Strand made of wire of Sample No: | Details of metallic coating on the wire: | | | | Adhesion test results: | | | |
|---|---|---|---|---|---|---|---|---|
| | Coating weight (g/kg) | Concentration (weight per cent) of: | | | Strength (kg) | | Rubber coverage (per cent) | |
| | | Cu | Zn | Ni | Unaged | Aged | Unaged | Aged |
| 13 | 6.2 | 68.1 | 31.9 | 0 | 57 | 50 | 90 | 85 |
| 14 | 4.0 | 65.6 | 33.0 | 1.4 | 54 | 57 | 100 | 100 |

Table III indicates that the wire of Sample No. 14 exhibits superior postcured steam aged adhesion to rubber than the commerical brass-coated wire of Sample No. 13.

### EXAMPLE IV

A further sample (Sample No. 16) of coated carbon steel wire was made to determine its suitability for use in tire beads. Such bead wires normally are plated with a bronze plating (consisting nominally of 99 per cent by weight of copper and 1 per cent by weight of tin) deposited by a displacement bath containing copper and tin sulfates. The plating is done at finished size because the deposit does not undergo the wire drawing operation, as in the previous examples. The coating weight of the commercial bead wires is generally in the range of from 0.3 to 1.0 gram of coating per kilogram of plated bead wire and the wire diameter is normally about 0.96 mm. Accordingly, Sample No. 16 was prepared by plating a 0.96 mm diameter carbon steel wire in a

- 10 -

ternary alloy bath of the type described above, and lengths thereof were incorporated in a proprietary rubber compound C specifically used for tire beads. Lengths of a commercially available bronze plated bead wire of 0.96 mm diameter (Sample No. 15) were also incorporated in the same rubber compound C.

The wire-rubber composites thus produced were tested by procedures recommended by the manufacturer of the rubber compound to determine their unaged adhesion strength and to determine their adhesion strength after precured humidity-aging for 2 days at 38°C and 98 per cent relative humidity.

The compositions of wire coatings in the two samples of wire and the results of the adhesion testing of the wire-rubber composites are given in the ensuing Table IV:-

TABLE IV

| Sample No: | Details of metallic coating on the wire: | | | | | Adhesion test results: | |
|---|---|---|---|---|---|---|---|
| | Coating weight (g/kg) | Concentration (weight per cent) of: | | | | Strength (kg) | |
| | | Cu | Zn | Ni | Sn | Unaged | Aged |
| 15 | 0.7 | 99 | 0 | 0 | 1 | 88 | 81 |
| 16 | 0.95 | 65.8 | 32.9 | 1.3 | 0 | 119 | 125 |

Table IV indicates that the wire of Sample No. 16 exhibits superior adhesion strength than the commercially available, bronze plated wire of Sample No. 15.

0008201

- 1 -

CLAIMS

1. A ferrous wire for use as a reinforcement for rubber-based material, having a homogeneous alloy coating deposited thereon, characterised in that the coating comprises from 0.3 to 6 per cent by weight of nickel, from 50 to 75 per cent by weight of copper and from 50 to 25 per cent by weight of zinc, and in that the coating comprises from 0.25 to 16.0 grams of coating per kilogram of the combined coating and wire.

2. A ferrous wire in accordance with claim 1, characterised in that it is drawable to a cross-sectional area of from 10 to 95 per cent of its original cross-sectional area.

3. A ferrous wire in accordance with claim 2, characterised in that it is drawable to a diameter of from 0.75 mm to 0.10 mm.

4. A ferrous wire in accordance with claim 1 for use as a reinforcement for rubber tire beads, characterised in that the coating comprises from 0.25 to 1.25 grams of coating per kilogram of combined coating and wire.

5. A ferrous wire in accordance with claim 4, characterised in that the diameter of the wire is from 0.88 mm to 2.03 mm.

**European Patent Office**

**EUROPEAN SEARCH REPORT**

Application number

EP 79 30 1555

## DOCUMENTS CONSIDERED TO BE RELEVANT

| Category | Citation of document with indication, where appropriate, of relevant passages | Relevant to claim |
|---|---|---|
| A | US - A - 3 749 558 (J.P. DILLEN-SCHNEIDER)<br>* Claim 1; column 1, lines 45-49; column 4, lines 9-19 *<br>-- | 1-3 |
| A | US - A - 2 939 207 (O.E. ADLER)<br>* Claims 3,5,6,15; column 4, lines 23-26; column 1, lines 50-67 *<br>-- | 1,2,5 |
| A | US - A - 2 154 834 (W. DE LA-MATTER)<br>* Claim 1; page 2, column 1, lines 6-16 *<br>-- | 1 |
| A | US - A - 2 296 838 (E.C. DOMM)<br>* Claim 2 *<br>---- | 1 |

**CLASSIFICATION OF THE APPLICATION (Int. Cl. ¹)**

B 29 H 9/10
B 60 C 9/00
C 23 C 17/00

**TECHNICAL FIELDS SEARCHED (Int.Cl. ³)**

B 29 H 9/10
B 60 C 9/00
C 23 C 17/00
C 25 D 5/50

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 07-11-1979 | BRACKE |

EPO Form 1503.1 06.78